(19) Europäisches Patentamt / European Patent Office / Office européen des brevets

(11) **EP 4 335 542 A1**

(12) **DEMANDE DE BREVET EUROPEEN**

(43) Date de publication:
**13.03.2024 Bulletin 2024/11**

(21) Numéro de dépôt: **23195463.7**

(22) Date de dépôt: **05.09.2023**

(51) Classification Internationale des Brevets (IPC):
**B01F 33/30** *(2022.01)*      **B01F 33/451** *(2022.01)*

(52) Classification Coopérative des Brevets (CPC):
**B01F 33/451; B01F 33/305**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **07.09.2022 FR 2208946**

(71) Demandeurs:
• **QFluidics**
  **67083 Strasbourg (FR)**
• **Université de Strasbourg**
  **67000 Strasbourg (FR)**

• **Centre National de la Recherche Scientifique**
  **75016 Paris (FR)**

(72) Inventeurs:
• **MARICHEZ, Vincent, Pascal**
  **67800 BISCHEIM (FR)**
• **HERMANS, Thomas**
  **67000 STRASBOURG (FR)**
• **THEBAULT, Caroline, Julie**
  **67200 STRASBOURG (FR)**
• **GIACCHETTI, Lucas, Jean, Daniel**
  **67550 VENDENHEIM (FR)**

(74) Mandataire: **Lavoix**
  **2, place d'Estienne d'Orves**
  **75441 Paris Cedex 09 (FR)**

(54) **DISPOSITIF DE MÉLANGE À ZONE DE CIRCULATION ET PROCÉDÉ ASSOCIÉ**

(57) Un dispositif de mélange (10) comprenant une chambre (12) définissant une zone de circulation (16), la zone de circulation (16) comprenant au moins un liquide de base (20) et un fluide de mélange (22), le fluide de mélange (22) étant moins paramagnétique que le liquide de base (20), le fluide de mélange (22) comprenant et/ou étant formé à partir d'au moins un premier fluide, le dispositif de mélange (10) comprenant au moins un élément magnétique générant un champ magnétique dans la zone de circulation (16) de sorte que le fluide de mélange (22) s'écoule au sein du liquide de base (20), la chambre (12) comprenant au moins un premier point d'injection (24) du premier fluide dans la zone de circulation (16), le premier point d'injection (24) débouchant dans le liquide de base (20), ou dans le fluide de mélange (22 ; 122), préférentiellement dans le liquide de base (20 ; 120), le premier fluide étant non miscible avec le liquide de base (20 ; 120).

FIG.2

EP 4 335 542 A1

**Description**

La présente invention concerne un dispositif de mélange et un procédé de mélange associé.

Un dispositif de mélange permet, par exemple, de mélanger deux liquides qui réagissent ensemble.

Un tel dispositif de mélange est, par exemple, un microréacteur avec une liaison en Y, dans laquelle les deux réactifs arrivent par une branche respective et fusionnent en une unique branche.

Les canaux du microréacteur ont, par exemple, un diamètre compris entre 50 $\mu$m et 1 mm avec des débits généralement inférieurs à 10 mL/min, ce qui correspond à un nombre de Reynolds réduit.

Ainsi, l'écoulement dans les canaux est laminaire, de sorte que les deux liquides se mélangent plus par diffusion, que par convection.

A titre d'exemple, il faut environ 250 secondes à une molécule de solvant pour traverser la distance d'un canal de 1 mm par diffusion uniquement, et donc environ 250 secondes pour considérer que deux liquides aqueux sont mélangés dans le cas d'une jonction de deux liquides dans un canal de 1 mm, dans le cas particulier d'un mélange purement par diffusion en condition purement laminaire à très bas nombre de Reynolds.

Pour améliorer le mélange entre les deux réactifs, il est, par exemple, possible d'ajouter un micro-mélangeur statique ou un mélangeur actif suite à la jonction des deux réactifs.

Cependant, le bon fonctionnement d'un tel microréacteur est compromis par l'apparition de solide, par exemple par formation d'un précipité. Un tel microréacteur est ainsi susceptible d'être bouché par les solides, notamment compte tenu de la taille des canaux.

Un but de l'invention est donc de proposer un dispositif de mélange apte à mélanger des fluides rapidement et à gérer l'apparition éventuelle de solide.

A cet effet, l'invention a pour objet un dispositif de mélange, comprenant une chambre définissant une zone de circulation, la zone de circulation comprenant au moins un liquide de base et un fluide de mélange, le fluide de mélange étant moins paramagnétique que le liquide de base, le fluide de mélange comprenant et/ou étant formé à partir d'au moins un premier fluide, le dispositif de mélange comprenant au moins un élément magnétique générant un champ magnétique dans la zone de circulation de sorte que le fluide de mélange s'écoule au sein du liquide de base, la chambre comprenant au moins un premier point d'injection du premier fluide dans la zone de circulation, le premier point d'injection débouchant dans le liquide de base ou dans le fluide de mélange, préférentiellement dans le liquide de base, le premier fluide étant non miscible avec le liquide de base.

Les parois liquides formées par le liquide de base sont aptes à gérer les solides, sans boucher la zone de circulation.

De plus, préférentiellement, l'injection de l'au moins un premier fluide au niveau du liquide de base entraîne un mélange plus efficace qu'un microréacteur classique, comme cela sera décrit plus en détail par la suite.

Selon des modes de réalisation particuliers de l'invention, le dispositif de mélange présente également l'une ou plusieurs des caractéristiques suivantes, considérées isolément ou suivant toutes combinaisons techniquement possibles :

- le fluide de mélange comprend et/ou est formé à partir d'au moins un deuxième fluide, la chambre comprenant un deuxième point d'injection du deuxième fluide dans la zone de circulation, le deuxième point d'injection débouchant dans le liquide de base ;
- le premier point d'injection et le deuxième point d'injection sont agencés de part et d'autre de la chambre selon une direction transversale de la chambre ;
- le premier fluide et le deuxième fluide présente les mêmes caractéristiques de paramagnétisme ;
- l'au moins un premier point d'injection est agencé sur un contour de la zone de circulation ;
- au moins un élément magnétique comprend un multipôle magnétique entourant au moins partiellement la chambre, le multipôle magnétique étant adapté pour générer un champ magnétique tel que le champ magnétique présente une valeur minimale dans la zone de circulation au centre de ladite zone de circulation ;
- au moins un élément magnétique comprend un élément additionnel agencé à une extrémité fermée de la chambre ;
- le liquide de base est un ferrofluide ;
- le fluide de mélange comprend et/ou est formé à partir d'au moins un deuxième fluide, la chambre comprenant un deuxième point d'injection du deuxième fluide dans la zone de circulation, le deuxième point d'injection étant agencé sur un contour de la zone de circulation ; et/ou
- le deuxième point d'injection est agencé au niveau d'une extrémité de la chambre, ladite extrémité étant une extrémité de la chambre selon une direction de circulation.

L'invention concerne en outre un procédé de mélange comprenant les étapes suivantes :

- fourniture d'un dispositif de mélange tel que décrit ci-dessus,

- injection de l'au moins premier fluide dans la zone de circulation par l'au moins un premier point d'injection, le premier fluide étant non miscible avec le liquide de base.

Le procédé de mélange est, par exemple, tel qu'est réalisé, dans la zone de circulation, un procédé chimique parmi une réaction acide-base, une réaction d'oxydation, une réaction de réduction, une réaction d'amidation, une réaction de condensation, une réaction d'hydrolyse, une réaction de cyanation, une réaction de couplage, une réaction d'estérification, une réaction d'halogénation, une réaction organique, ou une réaction inorganique.

Selon un mode de réalisation particulier de l'invention, le procédé de mélange comprend les caractéristiques suivantes : le dispositif de mélange est réalisée dans la zone de circulation entre le premier fluide et le deuxième fluide au moins une réaction impliquant une précipitation et/ou une cristallisation et/ou une peptisation et/ou une floculation et/ou une agrégation et/ou une polymérisation et/ou une réaction impliquant un catalyseur hétérogène solide, et/ou une réaction dans laquelle le réactif est solide.

D'autres caractéristiques et avantages de l'invention apparaîtront à la lecture de la description qui va suivre, donnée uniquement à titre d'exemple et faite en référence aux dessins annexés, dans lesquels :

- la figure 1 est une vue en coupe selon le plan A d'un premier exemple de dispositif de mélange selon l'invention,
- la figure 2 est une vue en coupe selon le plan B du dispositif de mélange de la figure 1,
- la figure 3 est une vue de côté du dispositif de mélange de la figure 1,
- la figure 4 est un exemple de répartition de l'intensité du champ magnétique pour un dispositif de mélange selon l'invention,
- la figure 5 est une vue en coupe selon le plan V d'un deuxième exemple de dispositif de mélange selon l'invention,
- la figure 6 est une vue en coupe selon le plan VI du dispositif de mélange de la figure 5.

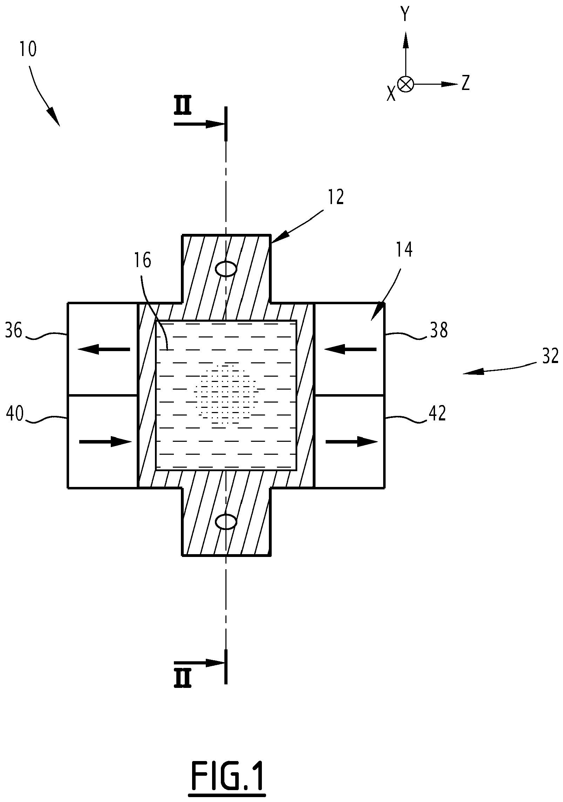

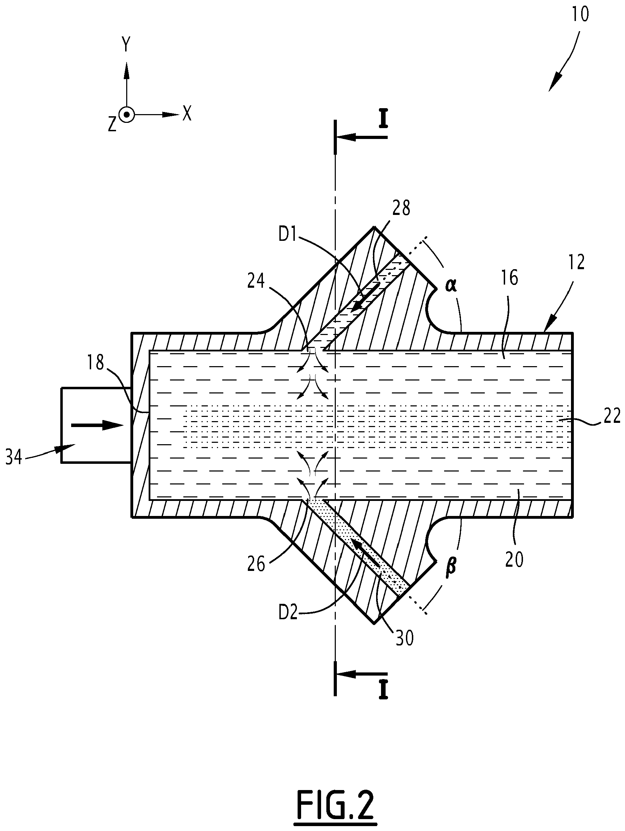

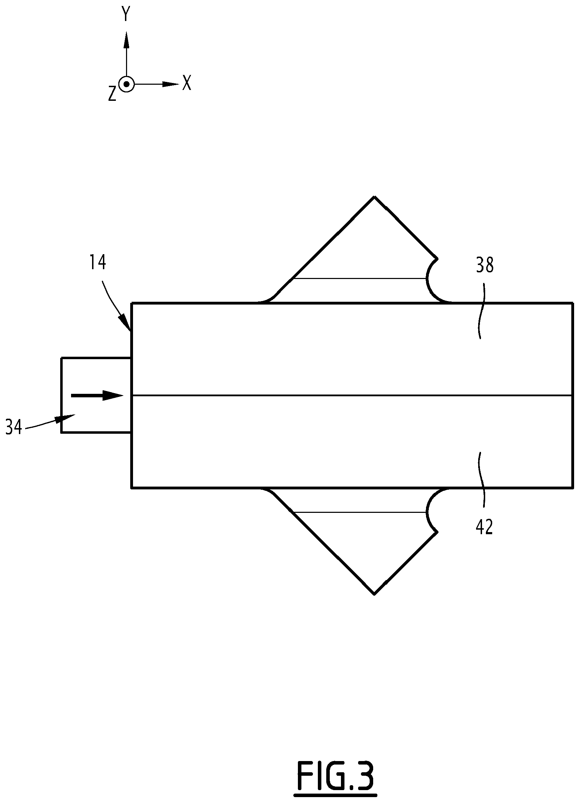

Un dispositif de mélange selon un premier mode de réalisation est représenté sur les figures 1 à 3.

Le dispositif de mélange 10 comprend une chambre 12 et au moins un élément magnétique 14.

La chambre 12 définit une zone de circulation 16.

La zone de circulation 16 s'étend selon une direction de circulation X.

On définit ici les termes « amont » et « aval » dans la direction de circulation X selon le sens d'écoulement général du fluide dans la zone de circulation 16.

La zone de circulation 16 présente toute forme souhaitée.

La zone de circulation 16 présente, par exemple, une section invariable selon la direction de circulation X.

La zone de circulation 16 est, par exemple, un cylindre présentant une base.

La base est, par exemple, cylindrique. Alternativement, la base est carrée, comme représenté, ou rectangulaire.

Dans un mode de réalisation, la zone de circulation présente une base circulaire, par exemple de diamètre de 3 mm.

La chambre 12, et ainsi la zone de circulation 16, comprend une extrémité fermée 18, ici selon la direction de circulation X.

L'extrémité fermée 18 correspond ici à une extrémité amont de la zone de circulation 16.

A l'opposé selon la direction de circulation X, la chambre 12 comprend une extrémité ouverte, dite aval, par exemple, reliée à un autre dispositif.

La zone de circulation 16 comprend une dimension selon la direction de circulation X comprise entre 1 cm et 100 m.

La zone de circulation 16 comprend au moins un liquide de base 20 et un fluide de mélange 22, ici un liquide de base 20 et un fluide de mélange 22.

Le fluide de mélange 22 est, par exemple, un liquide, dont par exemple une émulsion liquide, ou un liquide chargé en solide, par exemple appelé « slurry » ou un gaz.

Le fluide de mélange 22 est moins paramagnétique que ou présente une susceptibilité paramagnétique inférieure au liquide de base 20.

Le liquide de base 20 est, par exemple, un ferrofluide.

Alternativement, le liquide de base 20 est tout autre type de liquide paramagnétique, par exemple tel que l'un des matériaux paramagnétiques suivants à température ambiante : sulfate de cuivre, autre sels ferreux, de palladium, ou de platine.

Alternativement, le liquide de base 20 est une solution contenant des ions de terres rares, tels que $Gd^{3+}$, $Tb^{3+}$, $Dy^{3+}$, $Ho^{3+}$, $Er^{3+}$, $Tm^{3+}$.

D'autres exemples de liquide de base 20 possible comprennent des substances possédant des radicaux persistants tels que des nitroxydes comme TEMPO ((2,2,6,6-Tétraméthylpipéridin-1-yl)oxyl), des liquides ioniques de métaux de transition ou de lanthanides, tels que $[PR_4]_2[CoCl_4]$ où $[PR_4]$ est le trihexyl(tétradécyl)phosphonium, les cristaux liquides contenant des lanthanides, tels que $[Dy(LH)_3(NO_3)_3]$ où LH est le ligand de la base de Schiff, les métaux des terres rares ou les carbènes stables (triplet).

Le fluide de mélange 22 comprend et/ou est formé à partir d'au moins un premier fluide, ici d'un premier fluide et d'un deuxième fluide.

Le premier fluide et le deuxième fluide sont chacun moins paramagnétique que le liquide de base.

Le premier fluide et le deuxième fluide sont, par exemple, diamagnétiques.

Chacun du premier fluide et du deuxième fluide est, par exemple, respectivement non miscible avec le liquide de base.

Le premier fluide et le deuxième fluide présentent, par exemple, les mêmes caractéristiques de paramagnétisme.

Le premier fluide est, par exemple, un liquide, un gaz ou un liquide chargé en solide.

Le deuxième fluide est, par exemple, un liquide, un gaz ou un liquide chargé en solide.

Dans un mode de réalisation, au moins l'un du premier fluide et du deuxième fluide est un liquide ou un liquide chargé en solide, le fluide de mélange étant un liquide ou un liquide chargé en solide.

Le fluide de mélange 22 s'écoule au sein du liquide de base, grâce à l'au moins un élément magnétique 14, décrit ci-après.

Plus particulièrement, le liquide de base 20 entoure le fluide, ici le liquide, de mélange radialement autour de la direction de circulation X, et ici avantageusement au niveau de l'extrémité fermée 18.

Le fluide de mélange 22 n'est pas en contact avec les parois internes délimitant la zone de circulation 16.

Le fluide de mélange 22 forme ici un écoulement cylindrique circulaire au sein du liquide de base.

Alternativement, le fluide de mélange 22 forme un écoulement cylindrique à base triangulaire ou carré au sein du liquide de base.

L'écoulement présente un diamètre compris entre 10 $\mu$m et 10 cm, plus particulièrement compris entre 100 $\mu$m et 1 mm, par exemple égal à 1 mm.

La couche de liquide de base 20 tapissant l'extrémité fermée 18 présente, par exemple, une dimension selon la direction de circulation X supérieure ou égale à 1 0$\mu$m, par exemple supérieure ou égale à 0,5 mm.

La chambre 12 comprend au moins un premier point d'injection du premier fluide dans la zone de circulation 16, ici un premier point d'injection 24 du premier fluide et un deuxième point d'injection 26 du deuxième fluide.

Une première ligne d'alimentation 28 en premier fluide débouche dans la zone de circulation au premier point d'injection 24.

Le premier point d'injection 24 est, par exemple, reliée à une source de premier fluide.

Une deuxième ligne d'alimentation 30 en deuxième fluide débouche dans la zone de circulation au deuxième point d'injection 24.

Le deuxième point d'injection 26 est, par exemple, reliée à une source de deuxième fluide.

Chaque point d'injection 24, 26 débouche dans le liquide de base 20.

Plus particulièrement, chaque point d'injection 24, 26 est agencé sur un contour de la zone de circulation 16.

Chaque point d'injection 24, 26 est, par exemple, agencé dans une paroi respective de la chambre 12 délimitant la zone de circulation 16.

Plus particulièrement, chaque ligne d'alimentation 28, 30 débouche au niveau de la paroi respective.

Dans le mode de réalisation représenté, le premier point d'injection 24 et le deuxième point d'injection 26 sont agencés de part et d'autre de la chambre, par exemple ici selon une direction transversale Y de la chambre 12, la direction transversale Y de la chambre 12 étant perpendiculaire à la direction de circulation X.

Plus particulièrement, le premier point d'injection 24 et le deuxième point d'injection 26 sont alignés selon la direction transversale Y.

Chaque ligne d'alimentation 28, 30 est orientée telle qu'elle pointe vers l'amont de la zone de circulation 16 lorsqu'elle débouche.

Alternativement, chaque ligne d'alimentation 28, 30 est orientée vers l'aval de la zone de circulation lorsqu'elle débouche, de sorte que le flux de fluide présente une forme générale en Y.

Chaque ligne d'alimentation 28, 30 présente une direction d'alimentation respective D1, D2.

La direction d'alimentation respective D1, D2 s'étend dans un plan parallèle à la direction transversale Y et à la direction de circulation X.

Plus particulièrement ici, les directions d'alimentation s'étendent ici dans un unique plan.

La direction d'alimentation respective D1, D2 forme chacune un angle respectif $\alpha$, $\beta$ avec la direction de circulation X.

Les angles $\alpha$, $\beta$ sont, par exemple, compris entre 20° et 90°.

Les angles $\alpha$, $\beta$ sont, par exemple, égaux.

La chambre 12 est, par exemple, ici symétrique selon un plan médian P.

Dans l'exemple représenté, le plan médian P est parallèle à la direction de circulation X et, en outre ici à une direction latitudinale Z, la direction latitudinale Z étant perpendiculaire à la direction de circulation X et à la direction transversale Y.

Chaque ligne d'alimentation présente ici un diamètre compris entre 100 μm et 1 mm, ici sensiblement égal à 0,8 mm.

Dans un mode de réalisation alternatif, les injections au premier point d'injection et au deuxième point d'injection sont chacune orientée selon la direction latitudinale Z.

Dans un mode de réalisation alternatif non représenté, la chambre comprend strictement plus de deux points d'injection, similaires aux premier et deuxième points d'injection décrits précédemment, le fluide de mélange comprenant et/ou étant formé à partir de l'ensemble des fluides injectés aux points d'injection.

L'au moins un élément magnétique 14 génère un champ magnétique dans la zone de circulation de sorte que le fluide, ici liquide, de mélange s'écoule au sein du liquide de base, tel que décrit précédemment, plus particulièrement, tel que le liquide de base 20 entoure le fluide, ici liquide, de mélange radialement autour de la direction de circulation X, et ici avantageusement au niveau de l'extrémité fermée 18.

Dans l'exemple représenté, l'au moins un élément magnétique 14 comprend un multipôle magnétique, sur l'exemple représenté un quadripôle magnétique 32, entourant au moins partiellement la chambre 12.

L'au moins un élément magnétique 14 comprend ici en outre un élément additionnel 34 agencé à l'extrémité fermée 18.

On entend par multipôle magnétique 32 une pièce ou un ensemble de pièces formant un objet (y compris, par exemple, formé de pièces disjointes et à distance), l'objet présentant une pluralité de pôles magnétiques.

Le multipôle magnétique 32 s'étend sur toute l'extension de la chambre selon la direction de circulation X.

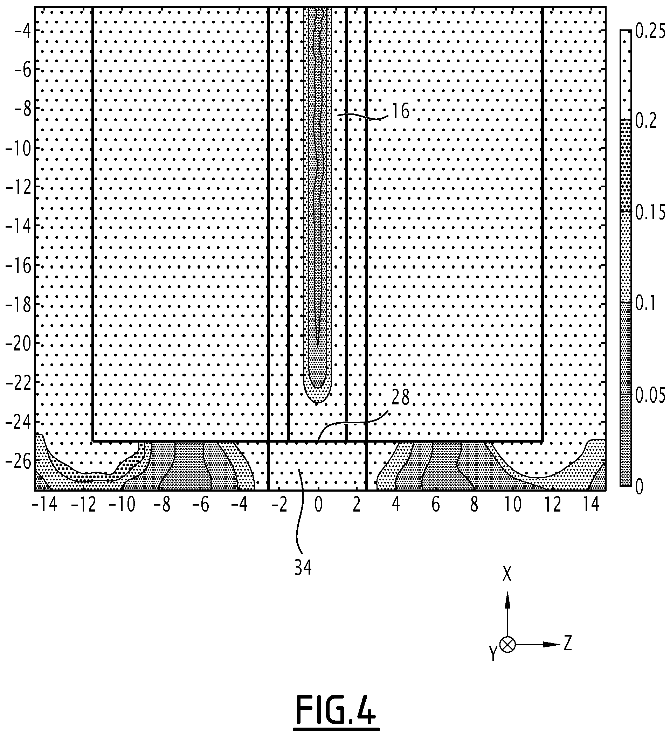

Le multipôle magnétique 32 est adapté pour générer un champ magnétique tel que le champ magnétique est le plus faible au centre de la zone de circulation 16, comme représenté sur l'exemple de la figure 4.

Le multipôle magnétique 32 s'étend ici contre des parois extérieures de la chambre, lesdites parois étant une extrémité de la chambre selon la direction latitudinale Z.

Plus particulièrement, le multipôle magnétique 32 entoure la zone de circulation 16 selon la direction de circulation X et la direction transversale Y.

Dans le mode de réalisation représenté, le multipôle magnétique 32 comprend, plus particulièrement est formé de, une pluralité d'aimants, par exemple quatre aimants.

Chaque aimant forme, par exemple ici un pôle du multipôle magnétique.

Alternativement, le multipôle magnétique 32 comprend plusieurs aimants mis les uns à la suite des autres, ici selon la direction de circulation X, en particulier de sorte à couvrir la dimension de la zone de circulation 16 selon la direction de circulation X. Par exemple, le multipôle magnétique 32 comprend, plus particulièrement est formé de, une pluralité d'aimants, chaque pôle du multipôle magnétique étant formé par une pluralité d'aimants mis bout à bout selon la direction de circulation.

Chaque aimant est, par exemple, un aimant permanent, par exemple un aimant au néodyme, c'est-à-dire composé essentiellement d'un alliage de néodyme, de fer et de bore, ou un aimant en ferrite, ou un aimant composé principalement d'aluminium, de nickel et de cobalt, dit aimant AlNiCo, ou un aimant en samarium-cobalt, dit aimant SmCo.

Chaque aimant est, par exemple, de grade N42.

Alternativement, chaque aimant est un électro-aimant.

Alternativement, le multipôle magnétique est réalisé d'un bloc, plus particulièrement d'un aimant multipôle ayant, au sein dudit aimant, une pluralité de directions de magnétisation.

Alternativement, le multipôle est réalisé d'une pluralité d'aimants multipôles ayant chacun, au sein dudit aimant, une pluralité de directions de magnétisation.

Dans l'exemple représenté, le quadripôle magnétique 32 comprend deux premiers aimants présentant une première orientation magnétique et deux deuxièmes aimants présentant une deuxième orientation magnétique.

Chaque premier aimant est agencé à côté d'un des deuxièmes aimants et face à l'autre premier aimant.

Les premiers et deuxièmes aimants génèrent chacun un champ magnétique de même intensité.

L'intensité du champ magnétique est, par exemple, comprise entre 0 T et 5 T, plus particulièrement ici entre 0 T et 0,5 T.

L'intensité maximale du champ magnétique, c'est-à-dire l'intensité du champ magnétique à l'emplacement où il est maximal, est, par exemple, supérieure à 1 mT, par exemple comprise entre 0,05 T et 0,5 T.

Plus particulièrement, dans l'exemple représenté, le quadripôle magnétique 32 comprend deux premiers aimants 36, 38 présentant une première orientation magnétique selon la direction latitudinale Z et deux deuxièmes aimants 40, 42 présentant une deuxième orientation magnétique selon la direction latitudinale Z, la deuxième orientation magnétique étant opposée à la première orientation magnétique.

Les premiers aimants 36, 38 sont agencés de part et d'autre de la chambre 12 selon la direction latitudinale Z.

Les premiers aimants 36, 38 sont espacés ici d'une distance comprise entre 50 μm et 10 cm, ici égale à 4 mm.

Les premiers aimants 36, 38 sont alignés selon la direction latitudinale Z.

Les deuxièmes aimants 40, 42 sont agencés de part et d'autre de la chambre 12 selon la direction latitudinale Z.

Les deuxièmes aimants 40, 42 sont espacés ici d'une distance comprise entre 50 μm et 10 cm, ici égale à 4 mm.

Les deuxièmes aimants 40, 42 sont alignés selon la direction latitudinale Z.

Chaque premier aimant 36, 38 est agencé à côté d'un deuxième aimant correspondant 40, 42 selon la direction transversale Y.

Il n'y a, par exemple, ici pas d'espace entre le premier aimant 36, 38 et le deuxième aimant correspondant 40, 42.

Alternativement, le premier aimant 36, 38 et le deuxième aimant correspondant 40, 42 sont espacés d'une distance inférieure ou égale à 10 mm, plus particulièrement inférieure ou égale à 2 mm. La distance entre le premier aimant 36, 38 et le deuxième aimant correspondant 40, 42 est, par exemple, inférieure à la dimension respective des aimants mesurée selon la direction de ladite distance.

Chaque premier aimant 36, 38 et le deuxième aimant correspondant 40, 42 s'étend sur l'ensemble des parois extérieures mentionnées précédemment.

Dans un mode de réalisation alternatif, non représenté, les premiers aimants et les deuxièmes aimants sont agencés similairement au mode de réalisation représenté, mais les premiers aimants présentent une première orientation magnétique selon la direction transversale Z et les deuxièmes aimants présentant une deuxième orientation magnétique selon la direction transversale Z, la deuxième orientation magnétique étant opposée à la première orientation magnétique.

Dans un mode de réalisation alternatif, non représenté, le multipôle comprend un nombre de pôles, supérieur ou égal à trois, égal ou non à quatre.

Le multipôle est, par exemple, agencé autour de la chambre tel que représenté aux figures 17 à 21 du brevet EP 3 571 405 B1.

L'élément additionnel 34 présente une orientation magnétique selon la direction de circulation X, de sorte à attirer vers lui le liquide de base 20.

L'élément additionnel 34 est, par exemple, un aimant supplémentaire.

L'élément additionnel 34 est agencé contre l'extrémité fermée de la chambre 18.

Il est ici centré selon les directions latitudinale Z et transversale Y par rapport à la zone de circulation 16.

L'aimant supplémentaire 34 est, par exemple, un aimant permanent, par exemple un aimant au néodyme, c'est-à-dire composé essentiellement d'un alliage de néodyme, de fer et de bore, ou un aimant en ferrite, ou un aimant composé principalement d'aluminium, de nickel et de cobalt, dit aimant AlNiCo, ou un aimant en samarium-cobalt, dit aimant SmCo.

Alternativement, l'aimant supplémentaire 34 est un électro-aimant.

Le champ magnétique généré par l'aimant supplémentaire 34 est ici maximale au niveau de l'extrémité fermée 18 dans la zone de circulation 16.

Un exemple est notamment représenté à la figure 4.

Cela permet notamment que le liquide de base 20 entoure le fluide, ici liquide, de mélange au niveau de l'extrémité fermée 18, de sorte que le fluide de mélange 22 n'est pas en contact avec l'extrémité fermée 18.

Le liquide de base 20 forme une épaisseur donnée entre l'extrémité fermée 18 et le fluide de mélange 22. L'épaisseur donnée est, par exemple, comprise entre 0 et 100 fois le diamètre de l'écoulement du fluide, ici liquide, de mélange, plus particulièrement comprise entre 0,5 mm et 10 cm.

Dans un mode de réalisation alternatif non représenté, le fluide, ici liquide, de mélange est constitué du premier fluide uniquement. La chambre comprend un unique point d'injection du premier fluide. Le premier fluide est, par exemple, pluri-composant. Le dispositif de l'invention permet alors, par exemple, de mélanger le premier fluide, de sorte à mélanger la pluralité de composants qui le composent.

Dans un autre mode de réalisation alternatif non représenté, la chambre comprend strictement plus que deux points d'injection de différents fluides. Les points d'injection sont, par exemple, répartis sur un plan perpendiculaire à la direction de circulation, sur la périphérie de la zone de circulation. Le fluide, ici liquide, de mélange est le mélange des différents fluides.

Un procédé de mélange va maintenant être décrit en regard du dispositif de mélange décrit précédemment.

Le dispositif de mélange 10 est fourni.

Dans l'exemple représenté, le premier fluide est injecté dans la zone de circulation au niveau du premier point d'injection 24. Il débouche ainsi dans le liquide de base 20.

Dans l'exemple représenté, le deuxième fluide est injecté dans la zone de circulation au niveau du deuxième point d'injection 26. Il débouche ainsi dans le liquide de base 20.

Chacun du premier fluide et du deuxième fluide est chassé par le liquide de base 20 vers le centre de la zone de circulation 16, plus particulièrement là où le champ magnétique est le plus faible.

De plus, chacun du premier fluide et du deuxième fluide est chassé par le liquide de base 20 pour les écarter de l'extrémité fermée 18.

Le premier fluide et le deuxième fluide sont ainsi mélangés au niveau de la zone centrale, plus particulièrement à une distance de l'extrémité fermée formée par le liquide de base 20, et forme le fluide de mélange 22.

Le fluide de mélange 22 s'écoule alors selon la direction de circulation X, entouré par le liquide de base 20.

Dans le mode de réalisation dans lequel la chambre comprend strictement plus que deux points d'injection de différents fluides, chacun des différents fluides est chassé par le liquide de base vers le centre de la zone de circulation, et ici à l'écart de l'extrémité fermée. Cela favorise le mélange entre les différents fluides.

Dans le mode de réalisation dans lequel la chambre comprend un unique point d'injection de fluide, celui-ci est chassé par le liquide de base vers le centre de la zone de circulation, et ici à l'écart de l'extrémité fermée. Cela créée ainsi un mélange du premier fluide susceptible d'accélérer des réactions entre différents composants du premier fluide.

Dans la zone de circulation, est réalisée, entre ici le premier fluide et le deuxième fluide, au moins une réaction impliquant au moins une précipitation, comme produit visé ou secondaire, et/ou une cristallisation et/ou une peptisation et/ou une floculation et/ou une agrégation et/ou une polymérisation, et/ou une réaction impliquant un catalyseur hétérogène solide, et/ou une réaction dans laquelle le réactif est solide.

L'ensemble de ces réactions entraînent la gestion de solides par le dispositif de mélange.

Dans le cas présent, la présence du liquide de base permet la gestion des solides.

En effet, contrairement à un mélangeur statique dans lequel les solides viennent s'accumuler et boucher la circulation de fluide, les solides ne peuvent pas s'accumuler contre le liquide de base par sa nature liquide. Similairement, les pales d'un mélangeur actif sont susceptibles de s'encrasser.

Enfin, les parois des canaux microfluidiques en aval d'une installation classique sont sujets au bouchage, contrairement à l'invention dans laquelle la présence du liquide de base permet l'évacuation des solides.

Ainsi, le dispositif de mélange ne se bouche pas par la présence de solides, mais permet au contraire leur circulation dans la zone de circulation.

L'au moins une réaction impliquant des précipitations comprend, par exemple, une réaction parmi les réactions suivantes : formation de chlorure d'argent (par réaction entre du chlorure de sodium et du nitrate d'argent), une réaction avec Grignards et/ou organolithiens et/ou organocuprates, une précipitation de métaux (par exemple, Aluminium, Gallium, Thorium, Bismuth, Fer, et/ou Etain), par exemple à l'aide d'urée, dans l'eau.

L'au moins une réaction impliquant un catalyseur hétérogène solide comprend, par exemple, une réaction utilisant du palladium (Pd) comme catalyseur, par exemple, l'une des réactions suivantes :

- une réaction d'oxydation, par exemple d'oxydations d'alcool,
- une réaction de réduction, par exemple une hydrogénation sélective, une réduction de liaison CC, une réduction de groupement CO, une réduction de groupement Nitro, une décarbonylation, une imination, réduction de groupement SO3H, ou une réduction de groupement nitrile, ou
- une réaction de couplage, par exemple une des réactions suivantes : Sonogashira, Hiyama, couplage de Glaser, réaction d'Ullmann, Cyclization cross-coupling, couplage C-X, ou Suzuki-Miyaura.

L'au moins une réaction impliquant un catalyseur hétérogène solide comprend, par exemple, une réaction utilisant des zéolites comme catalyseur, par exemple, l'une des réactions suivantes : Hydrocraquage, réaction d'hydroxylation d'arènes en phénol, réaction d'alkylation du benzene, ammoximation de cétone, epoxydation du propylene, ou isomérisation du propylene oxide.

L'au moins une réaction impliquant un catalyseur hétérogène solide comprend, par exemple, une réaction utilisant du nickel comme catalyseur, par exemple, l'une des réactions suivantes : couplages croisés d'alkyles électrophiles ou couplage de suzuki-Miyaura.

L'au moins une réaction impliquant un catalyseur hétérogène solide comprend, par exemple, une réaction utilisant de l'or (Au) comme catalyseur, par exemple, l'une des réactions suivantes : réaction d'oxydation, par exemple une oxydation de groupement CO.

L'au moins une réaction impliquant un catalyseur hétérogène solide comprend, par exemple, une réaction utilisant du platine (Pt) comme catalyseur, par exemple, l'une des réactions suivantes : une réaction d'oxydation, par exemple une oxydation de groupement CO ou une oxydation d'alcools, ou une réaction de réduction, par exemple une hydrogénation sélective.

L'au moins une réaction impliquant un catalyseur hétérogène solide comprend, par exemple, une réaction utilisant du ruthénium (Ru) comme catalyseur, par exemple, une réaction de réduction, par exemple une hydrogénation sélective.

L'au moins une réaction impliquant un catalyseur hétérogène solide comprend, par exemple, une réaction utilisant du rhodium (Rh) comme catalyseur, par exemple, une réaction d'hydroformilation.

L'au moins une réaction dans laquelle le réactif est solide comprend, par exemple, une réaction de dissolution de carbonate de magnésium dans l'acide nitrique.

De même que pour les solides, des réactions impliquant les liquides très visqueux sont susceptibles d'être réalisées dans le dispositif de mélange selon l'invention.

De tels réactions sont, par exemple, des réactions de polymérisations ou la formation de colloïdes.

Dans la zone de circulation, est réalisée un procédé chimique, par exemple un procédé chimique parmi la liste ci-dessous :

- une réaction acide - base, par exemple la réaction entre de l'acide sulfurique et de l'hydroxide de potassium ; ou
- une réaction d'oxydation, par exemple l'oxydation d'alcool primaire, secondaire ou benzylique ; ou
- une réaction de réduction, par exemple une réduction d'ester, une hydrogénation sélective, une réduction de liaison CC, une réduction de groupement CO, une réduction de groupement Nitro, une décarbonylation, une imination, réduction de groupement SO3H, ou une réduction de groupement nitrile ; ou
- une réaction d'amidation, par exemple pour la synthèse peptidique ou la fonctionnalisation de molécule cyclique ; ou
- une réaction de condensation, par exemple pour la condensation d'aldol ou une acylation ; ou
- une réaction d'hydrolyse, par exemple l'hydrolyse d'ester, d'acétal ou d'amide ; ou
- une réaction de cyanation, par exemple la fonctionnalisation d'arènes par un groupement nitrile ou la cyanation d'aldéhydec ; ou
- une réaction de couplage, par exemple une des réactions suivantes : Sonogashira, Hiyama, couplage de Glaser, réaction d'Ullmann, Cyclization cross-coupling, couplage C-X, ou Suzuki-Miyaura en utilisant un catalyseur homogène ; ou
- une réaction d'estérification, par exemple l'estérification d'acide carboxylique, de chlorure d'acide ou d'anhydride d'acide ; ou
- une réaction d'halogénation, par exemple des brominations ou des chlorinations ; ou
- un autre type de réaction organique, par exemple des réactions de diazotation ou de cycloaddition ; ou
- une réaction inorganique, par exemple la formation d'hydroxyde de lithium ou d'autres sels métalliques.

Exemple 1

Pour observer le mélange de réactifs réalisé par le dispositif de mélange, est mis en oeuvre le protocole de Villermaux-Dushman.

Ce protocole est notamment explicité dans le document suivant : Commenge, J.-M. & Falk, L. Villermaux-Dushman protocol for experimental characterization of micromixers. ChemicalEngineering and Processing: Process Intensification 50, 979-990 (2011).

Le premier fluide comprend de l'acide sulfurique ou $H_2SO_4$. Plus particulièrement, le premier fluide est une solution aqueuse d'acide sulfurique présentant une concentration molaire de 15 mM ou millimolaire.

Le deuxième fluide est un mélange KI(aq) + $KIO_3$ dans NaOH et $H_2BO_3$/ $H_3BO_3$ (aq).

Le deuxième fluide est le mélange d'une première solution et d'une deuxième solution.

La première solution comprend du iodure de potassium KI avec une concentration molaire de 16 mM, de l'hydroxyde de sodium NaOH avec une concentration molaire de 45 mM et de l'acide borique $H_3BO_3$ avec une concentration molaire de 45 mM.

La deuxième solution comprend de l'iodate de potassium $KIO_3$ avec une concentration molaire de 3 mM, de l'hydroxyde de sodium NaOH avec une concentration molaire de 45 mM et de l'acide borique $H_3BO_3$ avec une concentration molaire de 45 mM. Deux réactions ont lieu en parallèle de manière concurrente lorsque le deuxième fluide est mélangé avec le première fluide au sein du microréacteur.

- une réaction de neutralisation d'un tampon contenant des ions borates :

$$H_2BO_3^{--} + H^+ \rightarrow B(OH)_3,$$

et
- une réaction iodure-iodate : $IO_3^- + 5\,I^- + 6\,H^+ \rightarrow 3\,I_2 + 3\,H_2O$ suivie d'une réaction de production de triiodure : $I_2 + I^- \rightarrow I_3$.

La réaction de neutralisation est beaucoup plus rapide que la réaction iodure-iodate.

La réaction la plus lente entraîne la production de triiodure que l'on peut détecter par spectroscopie ultraviolet-visible (UV-Vis).

Si le mélange est bon, l'acide est consommé en priorité par la première réaction. Si le mélange est médiocre, l'acide va pouvoir être consommé par la seconde réaction et former le diiode qui lui-même va former l'ion triiodure que l'on détecte en UV.

Ainsi, moins le mélange entre les fluides est bon, plus la seconde réaction pourra se produire avant le mélange complet et plus le signal détecté par spectroscopie ultraviolet-visible sera élevé.

Il est possible de calculer le temps $t_m$ pour le mélange complet à partir de l'intensité du signal mesuré S pour un trajet optique de 1 mm et des concentrations initiales des différents composants, par la relation ci-dessous :

$$t_m = 0{,}33 \times S \times [H^+]^{-4.55} \times [KI]^{-1.5} \times [KIO_3]^{5.8} \times [NaOH]^{-2} \times [H_3BO_3]^{-2}$$

L'exemple a été mis en oeuvre avec un dispositif de mélange tel que décrit en regard des figures 1 à 3 pour un écoulement du fluide, ici liquide, de mélange ayant un diamètre de 1 mm sur une longueur de 5 cm. Le liquide de base forme une épaisseur de 0,75 mm entre l'extrémité fermée et le fluide, ici liquide, de mélange. Les aimants de part et d'autre de la chambre sont écartés d'une distance de 4 mm. Les aimants sont de grade N42.

Dans l'exemple, une zone de circulation présentant une base circulaire de diamètre égal à 3 mm est utilisée.

Les lignes d'alimentation présentent chacune un diamètre de 0,8 mm.

Cela est comparé à un microréacteur LTF-MS et à un microréacteur LTF-MX de la série MR-LAB de l'entreprise Little Things Factory GmbH. Chacun de ces microréacteurs ont un diamètre de canal de circulation égal à 1 mm.

Pour un débit global, c'est-à-dire du premier fluide et du deuxième fluide additionnés de 0,4 mL/min, il est calculé :

- pour le dispositif de mélange de l'invention, un temps $t_m$ de 0,2 secondes,
- pour le microréacteur LTF-MS, un temps $t_m$ de 9 secondes, et
- pour le microréacteur LTF-MX, un temps $t_m$ de 10 secondes.

Pour un débit global de 1 mL/min, il est calculé :

- pour le dispositif de mélange de l'invention, un temps $t_m$ inférieur à 0,3 seconde,
- pour le microréacteur LTF-MS, un temps $t_m$ compris entre 8 et 9 secondes, et
- pour le microréacteur LTF-MX, un temps $t_m$ de 6 secondes.

Pour un débit global de 2 mL/min, il est calculé :

- pour le dispositif de mélange de l'invention, un temps $t_m$ de 0,3 secondes,
- pour le microréacteur LTF-MS, un temps $t_m$ compris entre 6 et 7 secondes, et
- pour le microréacteur LTF-MX, un temps $t_m$ compris entre 4 et 5 secondes.

Ainsi, le dispositif de mélange de l'invention permet un mélange plus rapide que les microréacteurs existants.

Exemple 2

Pour observer la gestion des solides par le dispositif de mélange, un deuxième exemple est réalisé.

Le premier fluide est du chlorure de sodium en solution aqueuse. Le premier fluide est injecté avec un débit de 0,1 mL/min.

Le deuxième fluide est de l'éthanol. Le deuxième fluide est injecté avec un débit de 0,1 mL/min.

Le mélange du premier fluide et du deuxième fluide entraîne une précipitation des cristaux de NaCl.

L'exemple 2 a été mis en oeuvre avec un dispositif similaire à l'exemple 1.

L'exemple a été mis en oeuvre avec un dispositif de mélange tel que décrit en regard des figures 1 à 3 pour un écoulement du fluide, ici liquide, de mélange ayant un diamètre de 1 mm sur une longueur de 5 cm. Le liquide de base forme une épaisseur de 0,75 mm entre l'extrémité fermée et le fluide, ici liquide, de mélange. Les aimants de part et d'autre de la chambre sont écartés d'une distance de 4 mm. Les aimants sont de grade N42.

Dans l'exemple, une zone de circulation présentant une base circulaire de diamètre égal à 3 mm est utilisée.

Les lignes d'alimentation présentent chacune un diamètre de 0,8 mm.

Cela est comparé à un microréacteur LTF-MS et à un microréacteur LTF-MX de la série MR-LAB de l'entreprise Little Things Factory GmbH. Chacun de ces microréacteurs ont un diamètre de canal de circulation égal à 1 mm.

Le canal de circulation du microréacteur LTF-MS est bouché par les cristaux de NaCl en 2 minutes. Le canal de circulation du microréacteur LTF-MX est bouché par les cristaux de NaCl en 10 minutes.

Le dispositif de mélange de l'invention ne se bouche pas et fonctionne en continu au moins sur une durée de deux heures, sans apparition d'un bouchon. A l'issu des deux heures, l'exemple a été arrêté, sans signe de bouchon à venir dans le dispositif de l'invention.

Ainsi, le dispositif de mélange de l'invention permet une meilleure gestion des solides que les microréacteurs existants.

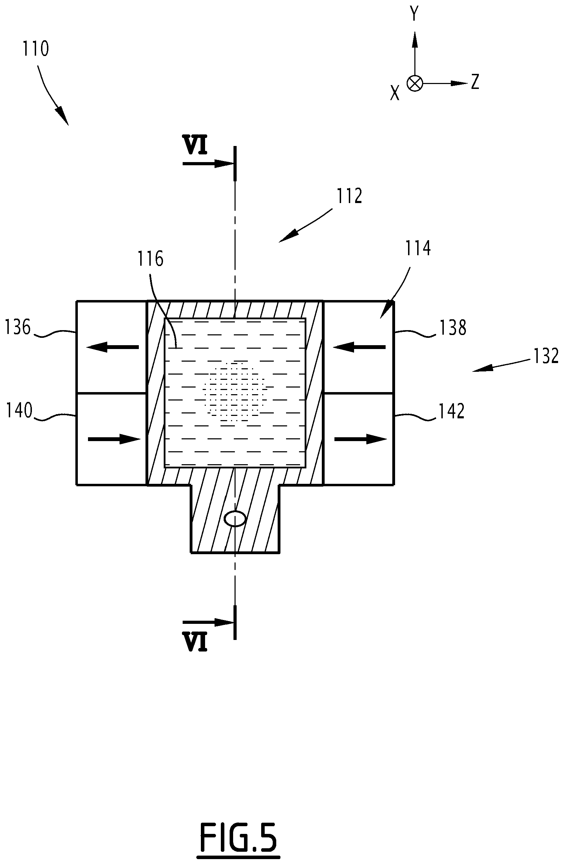

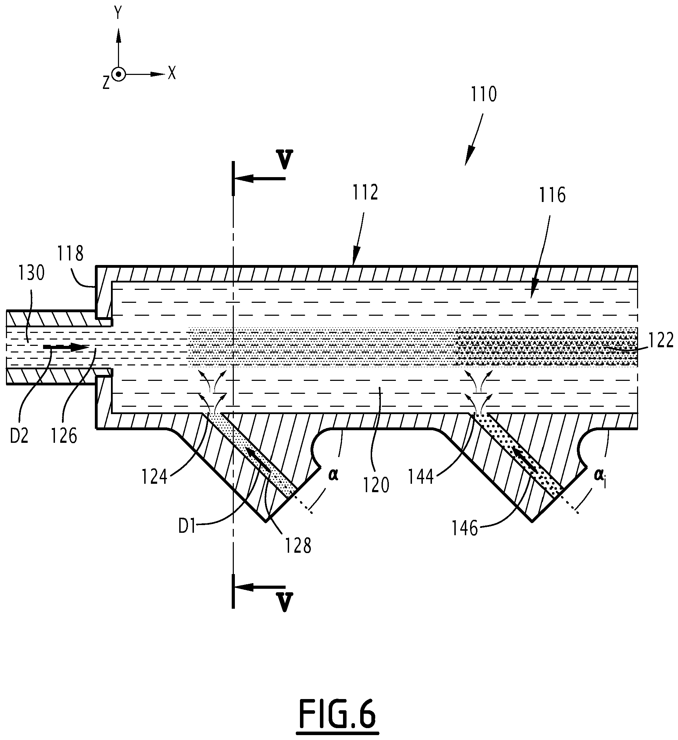

Un deuxième mode de réalisation d'un dispositif de mélange 110 selon l'invention va maintenant être décrit en regard des figures 5 et 6.

Le dispositif de mélange 110 comprend une chambre 112 et au moins un élément magnétique 114.

La chambre 112 définit une zone de circulation 116.

La zone de circulation 116 s'étend selon une direction de circulation X.

On définit ici les termes « amont » et « aval » dans la direction de circulation X selon le sens d'écoulement général du fluide dans la zone de circulation 16.

La zone de circulation 116 présente toute forme souhaitée.

La zone de circulation 116 présente, par exemple, une section invariable selon la direction de circulation X.

La zone de circulation 116 est, par exemple, un cylindre présentant une base.

La base est, par exemple, cylindrique. Alternativement, la base est carrée, comme représenté, ou rectangulaire.

Dans un mode de réalisation, la zone de circulation présente une base circulaire, par exemple de diamètre de 3 mm.

La chambre 112, et ainsi la zone de circulation 116, comprend une extrémité 118 selon la direction de circulation X.

L'extrémité 118 correspond ici à une extrémité amont de la zone de circulation 16.

L'extrémité 118 présente ici une ouverture, plus particulièrement une unique ouverture.

L'ouverture est, par exemple, centrée perpendiculairement à la direction de circulation X par rapport à la zone de circulation 116.

A l'opposé de l'extrémité 118 selon la direction de circulation X, la chambre 112 comprend une extrémité ouverte, dite aval, par exemple, reliée à un autre dispositif.

La zone de circulation 116 comprend une dimension selon la direction de circulation X comprise entre 1 cm et 100 m.

La zone de circulation 116 comprend au moins un liquide de base 120 et un fluide de mélange 122, ici un liquide de base 120 et un fluide de mélange 122.

Le liquide de base 20 et le fluide de mélange 22 sont tels que décrit précédemment en regard du premier mode de réalisation.

Similairement, le fluide de mélange 122 s'écoule au sein du liquide de base 120, grâce à l'au moins un élément magnétique 114, décrit ci-après.

Plus particulièrement, le liquide de base 120 entoure le fluide de mélange radialement autour de la direction de circulation X.

Le fluide de mélange 122 n'est pas en contact avec les parois internes délimitant la zone de circulation 16.

Le fluide de mélange 122 forme ici un écoulement cylindrique circulaire au sein du liquide de base.

Alternativement, le fluide de mélange 122 forme un écoulement cylindrique à base triangulaire ou carré au sein du liquide de base.

L'écoulement présente un diamètre compris entre 10 $\mu$m et 10 cm, plus particulièrement compris entre 100 $\mu$m et 1 mm, par exemple égal à 1 mm.

Dans l'exemple représenté, la chambre 112 comprend au moins un premier point d'injection 124 du premier fluide et un deuxième point d'injection 126 du deuxième fluide.

Le premier point d'injection 124 est, par exemple, reliée à une source de premier fluide.

Une première ligne d'alimentation 128 en premier fluide débouche dans la zone de circulation au premier point d'injection 124.

Le deuxième point d'injection 126 est, par exemple, reliée à une source de deuxième fluide.

Une deuxième ligne d'alimentation 130 en deuxième fluide débouche, par exemple, dans la zone de circulation au deuxième point d'injection 124.

Alternativement, la source de deuxième fluide comprend un réservoir présentant un volume interne comprenant du deuxième fluide, l'extrémité 118 étant agencée dans le réservoir, de sorte que l'ouverture de l'extrémité 118 soit agencée dans le volume interne du réservoir.

Le volume interne du réservoir et la zone de circulation 116 sont ici reliés fluidiquement au niveau de l'ouverture.

L'extrémité 118 est, par exemple, reliée au contenu du volume interne par l'intermédiaire d'un moyen de réglage de la pression de fluide, par exemple un réducteur de pression.

Le premier point d'injection 124débouche dans le liquide de base 20.

Chaque point d'injection 124, 126 est agencé sur un contour de la zone de circulation 116.

Chaque point d'injection 124, 126 est, par exemple, agencé dans une paroi respective de la chambre 112 délimitant la zone de circulation 116.

Plus particulièrement, chaque ligne d'alimentation 128, 130 débouche au niveau de la paroi respective.

Dans le mode de réalisation représenté, le premier point d'injection 124 est agencé au niveau d'une paroi latérale de la chambre, délimitant la chambre 112 selon une direction transversale Y, la direction transversale Y de la chambre 112 étant perpendiculaire à la direction de circulation X.

Dans le mode de réalisation représenté, le deuxième point d'injection 126 est agencé au niveau de l'extrémité 118, plus particulièrement de l'ouverture.

La première ligne d'alimentation 128 est, ici, orientée telle qu'elle pointe vers l'amont de la zone de circulation 116 lorsqu'elle débouche.

Alternativement, la première ligne d'alimentation 28est orientée vers l'aval de la zone de circulation lorsqu'elle débouche.

La deuxième ligne d'alimentation 130 est, ici, orientée selon la direction de circulation X.

La deuxième ligne d'alimentation 130 est ici reliée de manière étanche à la chambre 112 au niveau de l'ouverture à l'extrémité 118, par exemple directement (comme représenté ici) ou à l'aide d'un connecteur.

Chaque ligne d'alimentation 128, 130 présente une direction d'alimentation respective D1, D2.

La direction d'alimentation respective D1, D2 s'étend dans un plan parallèle à la direction transversale Y et à la direction de circulation X.

Plus particulièrement ici, les directions d'alimentation s'étendent ici dans un unique plan.

La direction d'alimentation respective D1, D2 forme chacune un angle respectif $\alpha$, $\beta$ avec la direction de circulation X.

L'angle $\alpha$ est, par exemple, compris entre 0° et 80°.

L'angle $\beta$ est ici nul.

La chambre 112 est, par exemple, ici symétrique selon un plan médian.

Dans l'exemple représenté, le plan médian est parallèle à la direction de circulation X et, en outre ici à une direction latitudinale Z, la direction latitudinale Z étant perpendiculaire à la direction de circulation X et à la direction transversale Y.

Chaque ligne d'alimentation présente ici un diamètre compris entre 100 $\mu$m et 1 mm, ici sensiblement égal à 0,8 mm.

Dans un mode de réalisation particulier, la chambre comprend strictement plus de deux points d'injection, le(s) point(s) d'injection supplémentaire(s) 144 étant similaire(s) au premier point d'injection décrit précédemment, le fluide de mélange comprenant et/ou étant formé à partir de l'ensemble des fluides injectés aux points d'injection.

Le(s) point(s) d'injection supplémentaire(s) 144 sont, par exemple, agencé(s) à la suite du premier point d'injection 124.

Les injections successives sont alors réalisées en série.

Le(s) point(s) d'injection supplémentaire(s) 144 débouche(nt) par exemple dans la même paroi latérale de la chambre que le premier point d'injection.

Alternativement, le(s) point(s) d'injection supplémentaire(s) 144 débouche(nt) dans toute paroi latérale de la chambre délimitant la chambre perpendiculairement à la direction de circulation X.

Chaque point d'injection supplémentaire 144 est alimenté par une ligne d'alimentation correspondante 146.

Chaque ligne d'alimentation correspondante 146 est, par exemple, orientée vers l'amont de la zone de circulation 116.

La direction d'alimentation respective de chaque point d'injection supplémentaire 144 forme un angle $\alpha_i$ avec la direction de circulation X.

L'angle $\alpha_i$ est, par exemple, compris entre 0° et 80°.

L'angle $\alpha_i$ est, par exemple, égal à l'angle $\alpha$.

Additionnellement ou alternativement, au moins un des points d'injection supplémentaire débouche dans l'extrémité 118, par exemple au niveau de l'ouverture ou d'une ouverture supplémentaire délimitée par l'extrémité 118.

L'extrémité 118 présente alors, par exemple, une ouverture par point d'injection débouchant dans l'extrémité.

Alternativement, l'extrémité 118 présente une unique ouverture, plus particulièrement centrée, l'ensemble des points d'injection étant au niveau de ladite ouverture. Chaque point d'injection au niveau de l'ouverture est, par exemple, relié à une ligne d'alimentation, l'ensemble desdites lignes d'alimentation étant relié à l'ouverture de manière étanche.

L'au moins un élément magnétique 114 génère un champ magnétique dans la zone de circulation de sorte que le fluide de mélange s'écoule au sein du liquide de base, tel que décrit précédemment, plus particulièrement, tel que le liquide de base 120 entoure le fluide de mélange radialement autour de la direction de circulation X.

Dans l'exemple représenté, l'au moins un élément magnétique 114 comprend un multipôle magnétique, sur l'exemple représenté un quadripôle magnétique 132, entourant au moins partiellement la chambre 112.

Contrairement au premier exemple, l'au moins un élément magnétique 114 est ici dépourvu d'un élément additionnel agencé à l'extrémité 118.

Le multipôle magnétique 132 est, par exemple, ici similaire à celui décrit en regard du premier mode de réalisation.

L'au moins un élément magnétique 114 est, dans l'exemple représenté, constitué du multipôle magnétique 132.

L'au moins un élément magnétique 114 est cependant susceptible d'être de tout agencement de sorte à générer un champ magnétique dans la zone de circulation de sorte que le fluide de mélange s'écoule au sein du liquide de base, tel que décrit précédemment, plus particulièrement, tel que le liquide de base 120 entoure le fluide, par exemple liquide, de mélange radialement autour de la direction de circulation X.

Similairement au premier mode de réalisation, l'au moins un élément magnétique 114 permet à ce que le fluide de mélange 122 n'entre pas en contact avec une paroi physique délimitant la chambre 112, le fluide de mélange 122 étant entouré du liquide de base 120.

Le dispositif de mélange est donc adapté pour mélanger des fluides rapidement et est, en particulier, apte à gérer l'apparition éventuelle de solide, le cas échéant, sans interrompre le fonctionnement du dispositif de mélange.

Dans un mode de réalisation alternatif non représenté, le point d'injection, s'il est unique, ou chacun des points d'injection sinon, débouche au niveau de l'extrémité 118.

Les points d'injection sont agencés sur un contour de la zone de circulation.

Chaque point d'injection débouche ici, par exemple, au niveau du fluide de mélange.

Chaque point d'injection ne débouche pas en regard du liquide de base.

Plus particulièrement, chaque point d'injection est agencé de sorte à déboucher à une distance du centre de l'extrémité inférieure au diamètre du fluide de mélange au sein de la zone de circulation.

En cas de plusieurs points d'injection, chaque point d'injection débouche au niveau d'une ouverture respective délimitée dans l'extrémité 118.

Alternativement, l'extrémité 118 présente moins d'ouvertures que de points d'injection, au moins deux points d'injection débouchant dans une même ouverture.

Le dispositif de mélange ne présente alors pas de points d'injection sur les parois latérales de la chambre.

Dans un mode de réalisation alternatif non représenté, au moins un point d'injection débouche directement dans le fluide de mélange, en dehors d'une extrémité de la chambre selon la direction de circulation.

Plus particulièrement, ledit point d'injection est relié à une ligne d'alimentation, la ligne d'alimentation comprenant une portion s'étendant dans la zone de circulation, de sorte que la ligne d'alimentation débouche directement dans le fluide de mélange.

Dans un mode de réalisation particulier, le dispositif comprend, par exemple, uniquement de tels points d'injection.

Alternativement, le dispositif comprend au moins un tel point d'injection et au moins un point d'injection au niveau de l'extrémité 118.

Alternativement ou additionnellement, le dispositif comprend en outre au moins un point d'injection dans le liquide de base. Le cas échéant, le fluide injecté dans le liquide de base est chassé par le liquide de base vers le centre de la zone de circulation, ce qui favorise le mélange entre les différents fluides, y compris avec le ou les fluides injectés directement dans le fluide de mélange ou au niveau de l'extrémité.

Lors du procédé, un fluide est injecté à chaque point d'injection au niveau de l'extrémité. L'ensemble des fluides se rencontrent directement au niveau du fluide de mélange, de sorte qu'une réaction a, par exemple, lieu.

De tels dispositifs de mélange présentent de moins bonnes qualités de mélange que lors de l'injection dans le liquide de base, mais permettent également de gérer l'apparition éventuelle de solide, le cas échéant, sans interrompre le fonctionnement du dispositif de mélange, par la présence du fluide de base autour du fluide de mélange, qui permet notamment de gérer l'apparition éventuelle de solide.

## Revendications

1. Dispositif de mélange (10 ; 110) comprenant une chambre (12 ; 112) définissant une zone de circulation (16 ; 116), la zone de circulation (16 ; 116) comprenant au moins un liquide de base (20 ; 120) et un fluide de mélange (22 ; 122), le fluide de mélange (22 ; 122) étant moins paramagnétique que le liquide de base (20 ; 120), le fluide de mélange (22 ; 122) comprenant et/ou étant formé à partir d'au moins un premier fluide, le dispositif de mélange (10 ; 110) comprenant au moins un élément magnétique (14 ; 114) générant un champ magnétique dans la zone de circulation (16 ; 116) de sorte que le fluide de mélange (22 ; 122) s'écoule au sein du liquide de base (20 ; 120), la chambre (12 ; 112) comprenant au moins un premier point d'injection (24 ; 124) du premier fluide dans la zone de circulation (16 ; 116), le premier point d'injection (24 ; 124) débouchant dans le liquide de base (20 ; 120) ou dans le fluide de mélange (22 ; 122), préférentiellement dans le liquide de base (20 ; 120), le premier fluide étant non miscible avec le liquide de base (20 ; 120).

2. Dispositif de mélange selon la revendication 1, dans lequel le fluide de mélange (22) comprend et/ou est formé à partir d'au moins un deuxième fluide, la chambre (12) comprenant un deuxième point d'injection (26) du deuxième fluide dans la zone de circulation (16), le deuxième point d'injection (26) débouchant dans le liquide de base (20).

3. Dispositif de mélange selon la revendication 2, dans lequel le premier point d'injection (24) et le deuxième point d'injection (26) sont agencés de part et d'autre de la chambre (12) selon une direction transversale (Y) de la chambre (12).

**4.** Dispositif de mélange selon la revendication 2 ou 3, dans lequel le premier fluide et le deuxième fluide présente les mêmes caractéristiques de paramagnétisme.

**5.** Dispositif de mélange selon l'une quelconque des revendications 1 à 3, dans lequel l'au moins un premier point d'injection (24 ; 124) est agencé sur un contour de la zone de circulation (16).

**6.** Dispositif de mélange selon l'une quelconque des revendications 1 à 4, dans lequel l'au moins un élément magnétique (14 ; 114) comprend un multipôle magnétique (32 ; 132) entourant au moins partiellement la chambre (12 ; 112), le multipôle magnétique (32 ; 132) étant adapté pour générer un champ magnétique tel que le champ magnétique présente une valeur minimale dans la zone de circulation (16 ; 116) au centre de ladite zone de circulation (16 ; 116).

**7.** Dispositif de mélange selon l'une quelconque des revendications 1 à 5, dans lequel l'au moins un élément magnétique (14) comprend un élément additionnel (34) agencé à une extrémité fermée de la chambre (12).

**8.** Dispositif de mélange selon l'une quelconque des revendications 1 à 7, dans lequel le liquide de base (20 ; 120) est un ferrofluide.

**9.** Dispositif de mélange selon l'une quelconque des revendications 1 à 8, dans lequel le fluide de mélange (22 ; 122) comprend et/ou est formé à partir d'au moins un deuxième fluide, la chambre (12 ; 112) comprenant un deuxième point d'injection (26 ; 126) du deuxième fluide dans la zone de circulation (16 ; 116), le deuxième point d'injection (26 ; 126) étant agencé sur un contour de la zone de circulation (16 ; 116).

**10.** Dispositif de mélange selon la revendication 9, dans lequel le deuxième point d'injection (126) est agencé au niveau d'une extrémité (118) de la chambre (112), ladite extrémité (118) étant une extrémité de la chambre (112) selon une direction de circulation (X).

**11.** Procédé de mélange comprenant les étapes suivantes :

- fourniture d'un dispositif de mélange (10) selon l'une quelconque des revendications 1 à 10,
- injection de l'au moins premier fluide dans la zone de circulation (16) par l'au moins un premier point d'injection (24), le premier fluide étant non miscible avec le liquide de base (20).

**12.** Procédé de mélange selon la revendication 11, dans lequel est réalisé, dans la zone de circulation (16), un procédé chimique parmi une réaction acide-base, une réaction d'oxydation, une réaction de réduction, une réaction d'amidation, une réaction de condensation, une réaction d'hydrolyse, une réaction de cyanation, une réaction de couplage, une réaction d'estérification, une réaction d'halogénation, une réaction organique, ou une réaction inorganique.

**13.** Procédé de mélange selon la revendication 11, dans lequel le dispositif de mélange est selon la revendication 2, dans lequel est réalisée dans la zone de circulation (16) entre le premier fluide et le deuxième fluide au moins une réaction impliquant une précipitation et/ou une cristallisation et/ou une peptisation et/ou une floculation et/ou une agrégation et/ou une polymérisation et/ou une réaction impliquant un catalyseur hétérogène solide, et/ou une réaction dans laquelle le réactif est solide.

FIG.1

## FIG.2

FIG.3

FIG.4

## FIG.5

## FIG.6

# RAPPORT DE RECHERCHE EUROPEENNE

**Numéro de la demande**

EP 23 19 5463

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | US 11 434 882 B2 (UNIV STRASBOURG [FR]; CENTRE NAT RECH SCIENT [FR] ET AL.) 6 septembre 2022 (2022-09-06) | 1,5-8, 11,12 | INV. B01F33/30 B01F33/451 |
| A | * colonne 1, lignes 25-39 * <br> * colonne 3, lignes 40-45 * <br> * colonne 4, ligne 60 – colonne 5, ligne 35 * <br> * colonne 6, lignes 26-31 * <br> * colonne 6, lignes 10-54 * <br> * colonne 7, lignes 1-35 * <br> * colonne 7, lignes 56-58 * <br> * colonne 8, ligne 45 – colonne 9, ligne 12 * <br> * colonne 11, lignes 5-18 * <br> * colonne 11, lignes 10-57 * <br> * figures 1, 4, * <br> ----- | 2-4,9, 10,13 | |
| A | DE 196 41 737 A1 (ERNST MESSERSCHMID STEINBEIS T [DE]) 4 décembre 1997 (1997-12-04) * colonne 1, lignes 21-64 * * figure 1 * ----- | 1-13 | |

**DOMAINES TECHNIQUES RECHERCHES (IPC)**

B01F

Le présent rapport a été établi pour toutes les revendications

| Lieu de la recherche | Date d'achèvement de la recherche | Examinateur |
|---|---|---|
| La Haye | 29 janvier 2024 | Posten, Katharina |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................
& : membre de la même famille, document correspondant

EPO FORM 1503 03.82 (P04C02)

# EP 4 335 542 A1

## ANNEXE AU RAPPORT DE RECHERCHE EUROPEENNE
## RELATIF A LA DEMANDE DE BREVET EUROPEEN NO.

EP 23 19 5463

29-01-2024

| Document brevet cité au rapport de recherche | | Date de publication | Membre(s) de la famille de brevet(s) | | Date de publication |
|---|---|---|---|---|---|
| US 11434882 | B2 | 06-09-2022 | CN | 110914544 A | 24-03-2020 |
| | | | EP | 3351796 A1 | 25-07-2018 |
| | | | EP | 3571405 A1 | 27-11-2019 |
| | | | KR | 20190134599 A | 04-12-2019 |
| | | | US | 2021332815 A1 | 28-10-2021 |
| | | | WO | 2018134360 A1 | 26-07-2018 |
| DE 19641737 | A1 | 04-12-1997 | AUCUN | | |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3571405 B1

**Littérature non-brevet citée dans la description**

- **COMMENGE, J.-M. ; FALK, L.** Villermaux-Dushman protocol for experimental characterization of micromixers. *ChemicalEngineering and Processing: Process Intensification,* 2011, vol. 50, 979-990